# EUROPEAN PATENT APPLICATION

(11) **EP 0 758 121 A1**
(43) Date of publication of application: **12.02.1997**
(21) Application number: 96112795.8
(22) Date of filing: 08.08.1996
(51) Int. Cl.: G09B 15/04

(54) **Instrument for musicotherapy**

(30) Priority: 09.08.1995 JP 222724/95
(71) Applicant: Nagase, Kenji, Misato-shi, Saitama-ken (JP)
(72) Inventor: Kogure, Kyuya, Fukaya-shi, Saitama-ken (JP); Nagase, Kenji, Misato-shi, Saitama-ken (JP)
(74) Representative: Klingseisen, Franz, Dipl.-Ing.

(57) **Abstract**

An instrument for musicotherapy which stimulates and urges patients suffering from dementia, aphasis, and other functional disorders of brain to sing a song. The instrument comprises an indication part (1), an operating part (3), and a scale generator (4).

The indication part (1) indicates the words of song (2), and is put upon the operating part(3). The operating part (3) is equipped with a switching means corresponding to the above-mentioned words of song which is connected to the scale generator (4). The switching means is connected to the scale generator (4) which starts to generate the musical sound and/or voice of the song melody in order to stimulate and urge a patient to sing the song when an instruction is given successively to actuate the indication of the words of the song (2).

## Description

### Background of the Invention:

### (1) Field of the Invention:

This invention relates to an instrument for musicotherapy for the treatment of patients suffering from dementia, aphasia, and other functional disoders of brain.

### (2) Background Information:

The effects of musicotherapy on the treatment of patients suffering from dementia, aphasia, and other functional disorders of brain have been recognized, and it has been known that musicotherapy has significant effects of curing them especially when songs are applied to it.

Taking a patient suffering from dementia as an example, it is widely known that musicotherapy is an effective and useful therapy to enable a patient to recover the touches of humanity and return to active life because the forgotten memories of life are brought back to achieve the spiritual uplift and stabilized sentiments of the patient when the patient is stimulated and urged to listen to or sing a song familiar to him or her.

In addition, in the case of a patient who came to suffer from aphasia due to the damage of brain, the patient begins to vocalize the words of song by the induction of the memory of melody and rhythm when the patient is stimulated and urged to listen to or sing a song familiar to his or her. Accordingly, it may well be said that there is a good possibility that musicotherapy serves as a therapy to reconstruct the faculty of speech in the brain of aphasiac.

In general, patients suffering from dementia, aphasia, and othr functional disorders of brain often have the functional disorder of physical movement as a complication. As a result, it is difficult for patients to voluntarily sing a song, and it is almost impossible for them to play a conventional musical instrument.

Accordingly, the physicians and nurses engaged in musicotherapy select a song that seems to be suited to a patient to make him or her listen to or sing the song using a musical instrument or an equipment for do-it-yourself vocals. However, there are many cases that musicotherapy has to be applied to a group of patients because of the lack of therapists for the rapidly increasing number of persons who need treatment.

However, as the musical attainments and the taste in songs vary with person owing to the difference of age and life experience, the group therapy has not always succeeded in obtaining the expected treatment results.

### Summary of the Invention:

The object of the present invention is to offer an instrument for musicotherapy that enables patiets suffering from dementia, aphasia, and other functional disorders of brain to voluntarily play a desired song and sing the song by the induction of the memory of its melody and rhythm even if the patients do not have the knowledge and technique of playing a musical instrument. If such an instrument is available at medical institutions located in various places of the country, it is expected that favorable results of musicotherapy will be achieved to help patients suffering from dementia and other disease receive home treatment despite the progressive aging of citizens regardless of the presence of therapist.

The above problems are solved by the present invention offering an instrument for musicotherapy wherein an indicating part that indicates the words of song, an operating part having a switching means corresponding to the words of song indicated by the indicating part, and a scale generator connected to the switching means of the operating part stimulate and urge a person who need treatment to vocalize the sound and/or voice for the melody of pertinent song and sing the song when the swithing means corresponding to the words of song is operated.

### Brief description of the drawings:

Figure 1 illustrates the basic composition of the present invention.

Figure 2 is a front view showing an embodiment of an indicating part.

Figure 3 is a front view showing another embodiment of the indicating part.

Figure 4 is a front view showing other embodiment of the indicating part.

Figure 5 illustrates an operating part. In Figure 5, (A) is a perspective view showing the state that part of the surface sheet is peeled off, and (B) is an expanded sectional view.

Figure 6 illustrates the state that the indicating part is put upon the operating part.

Figure 7 illustrates other state that the indicating part is put upon the operating part.

Figure 8 shows an embodiment of the incorporation of the operating part and indicating body into one. In Figure 8, (A) is a perspective view, and (B) is an expanded sectional view.

Figure 9 illustrates the state that the indicating part expressed by the scale required for playing is put upon the operating part.

Figure 10 illustrates other indicating part expressed by the scale required for playing.

### Detailed description of the preferred embodiments:

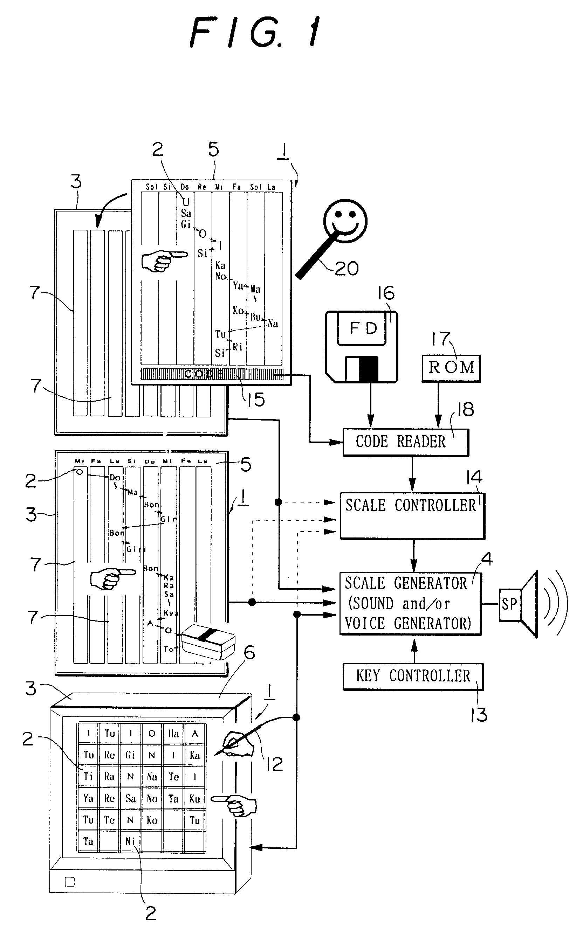

Figure 1 shows the basic composition of the instrument for musicotherapy based on the present invention. The instrument for musicotherapy mainly comprises of an indicating part (1) that indicates the words of song (2), an operating part (3)having switching means corresponding to the words of song indicated by the indicating part, and a scale generator (4) connected to the switching means of the operating part. The indicating part(1) is formed as an indicating body (5) in the shape of a pieceof paper or plastic sheet, and also can be formed as a display type indicator (6) that indicates the indication (2) electrically by use of CRT, liquid crystal display, etc.

The indication (2) is indicated fixedly by use of printing, photocopy, writing, etc. The indication may be indicated with a marker so that it can be erased with an appropriate eraser, forming the indicating body (5) using an appropriate material accordingly.

The form of the inidcation of the words of song (2) described on the indicating part (1) is shown in various forms according to the degree of disorder of patients who need treatment.

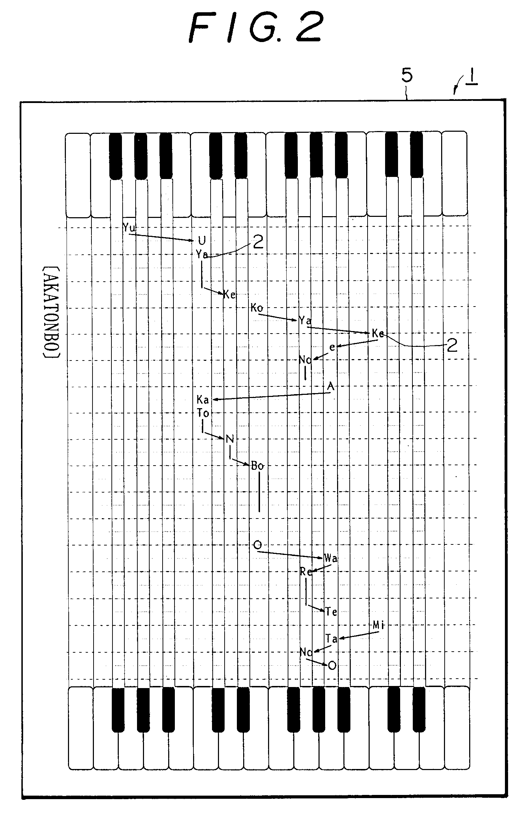

In the case of persons who are in almost healthy condition, the indication part are preferably provided with indication of the external feature and arrangement of conventional musical instrument in the upper and lower portions of the indicating part as well as horizontal lines to show the process of time such as musical time pattern and rhythm as shown in Figure 2. These composition are effective to sing a song because the natural division of the words of song and melodic lines are shown clearly.

However, because it becomes difficult to process many information as the degree of disordr of patients progresses, and the disordr of physical movement occurs as a complication, it is effective to make the minimum indiction needed to meet the purpose.

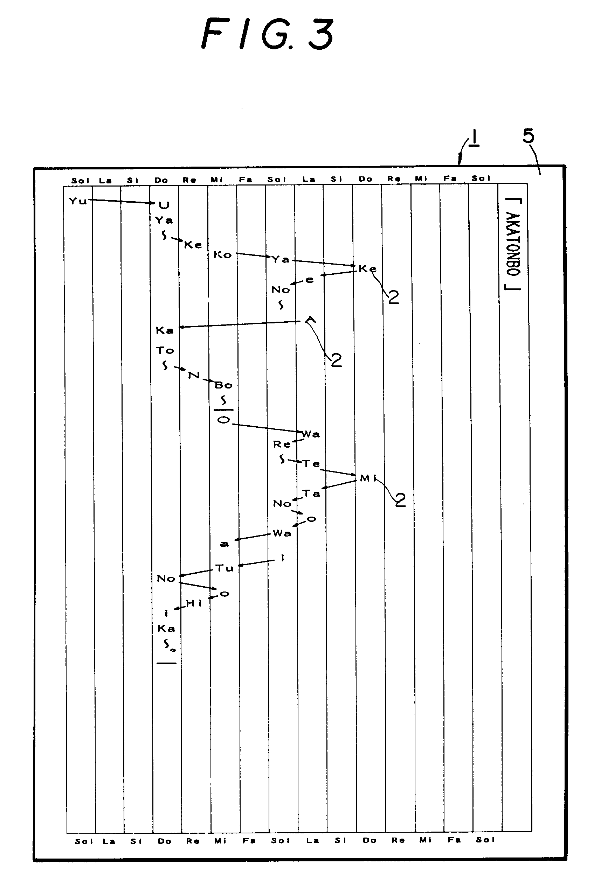

For example, in the case that the degree of disorder is serious, the musical factors such as conventional musical instrument and score do not make sense for musicotherapy. Accordingly, horizontal lines can be omitted as the external feature and arrangement of conventional musical instrument as well as the process of time such as musical time pattern and rhythm of a song familiar to patients generally kept in memory except for the serious degree of disorder as shown in Figure 3.

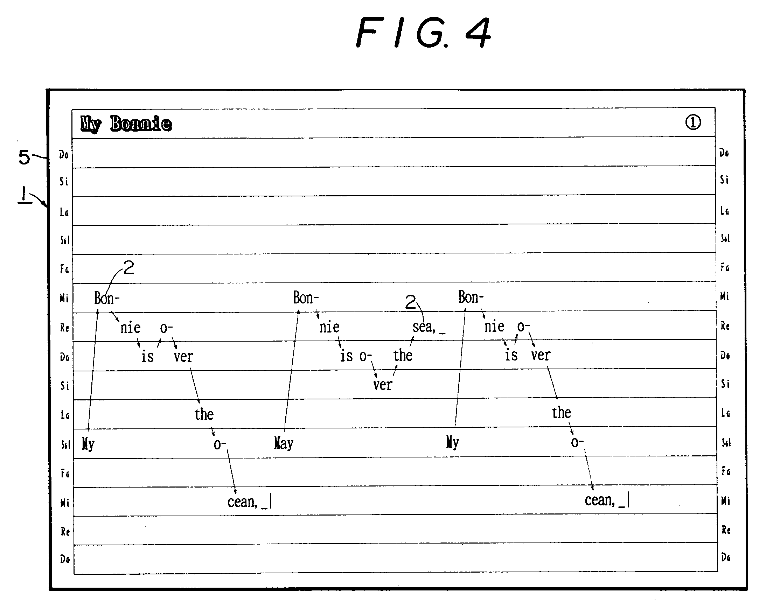

The indication of musical notes such as "do, re, me, fa... .." corresponding to a melody can also be omitted though it is useful to a therapist. It is possible to make the horizontal indication corresponding to a song in English, German, French, etc., written horizontally as shown in Figure 4.

The front size of the operating part (3) is formed in the almost same size as that of the indicating part (1). It is possible to use various types of switches such as contact type switch, touch switch, and photoelectric switch for the switching means. The switching means of the operating part (3) shown in the upper and central portions of Figure 1 is provided with plural belt-shaped switch piece (7) to make it possible to turn on the switch when any position along the switch piece (7) is depressed.

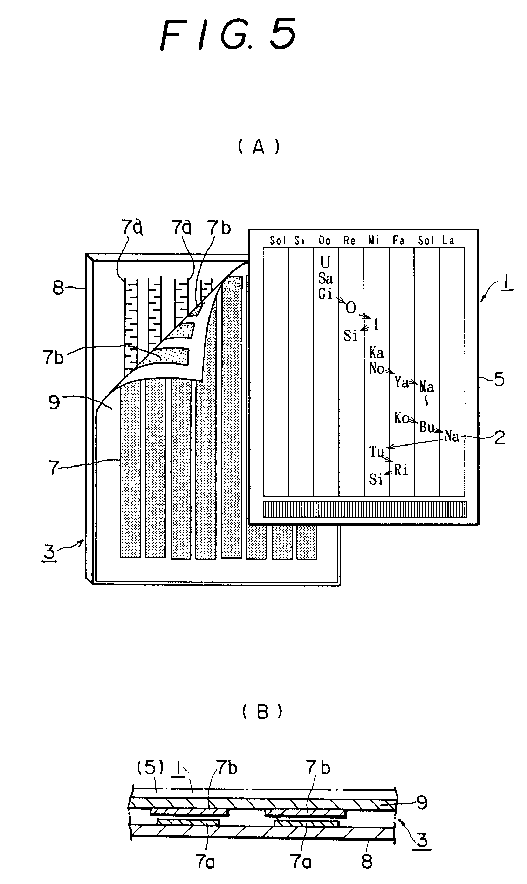

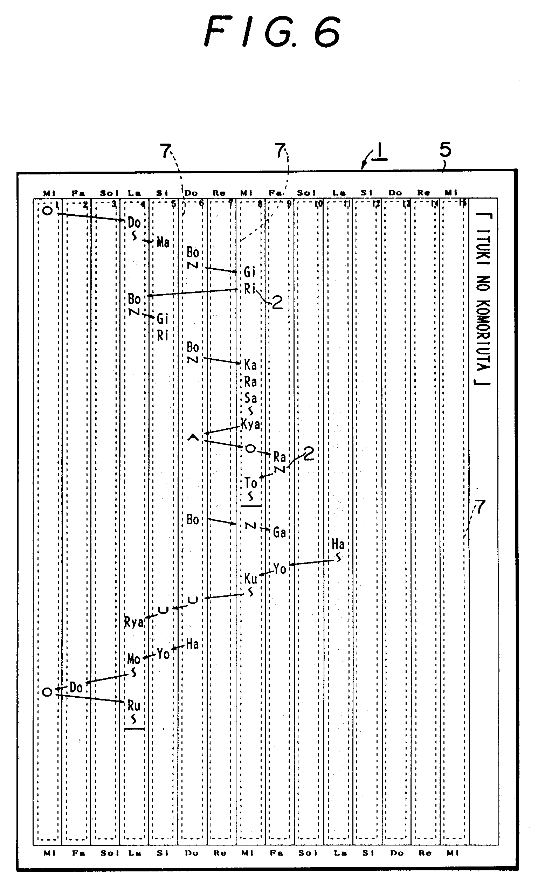

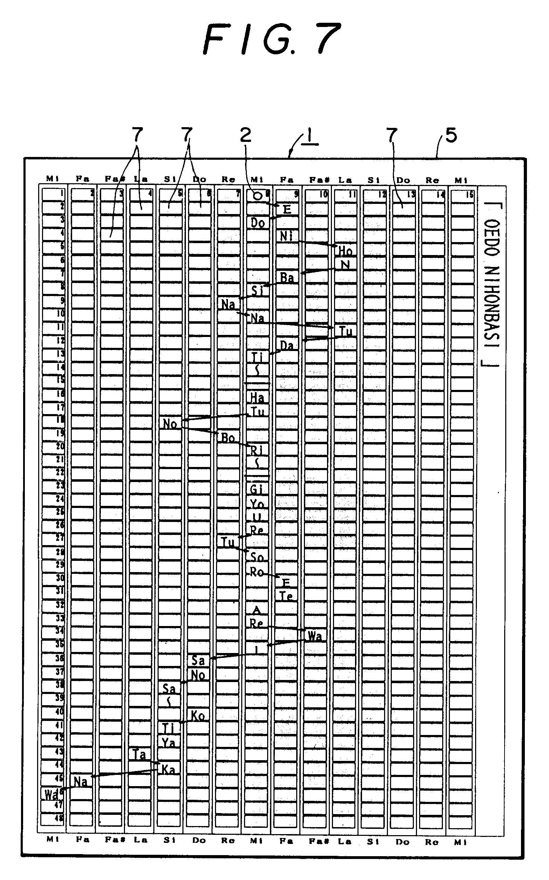

An example of the preferable embodiment of the contact switch type switch piece (7) is shown in Fig.5 (A)(B). In this example, the operating part (3) has lattice-shaped contact points (7a) arranged in the shape of belt that constitute one section of the switch piece (7) on the surface of the base plate (8), and the surface sheet (9) is stuck to the suface of the base plate (8) with an interval formed by a suitable flexible spacer or spring (not shown). Another contact points (7b) made of conductive materials such as carbon and conductive rubber are formed in a position at the back of the surface sheet (9) corresponding to the contact points (7a). When the indicating body (5) is put upon the surface sheet (9) as shown in Figure 5(B), the switch piece (7)(switching means) is arranged in a position shown by the chain line in Figure 6 as seen from the surface. The switch pice (7) can be formed in a rectangle shape and be arranged in a straight line. When the indicating body (5) is put upon such operating part (3)with plural switch pieces, the switch piece(7) (switching means) is arranged in a position as shown by the rectangular frame in Figure 7.

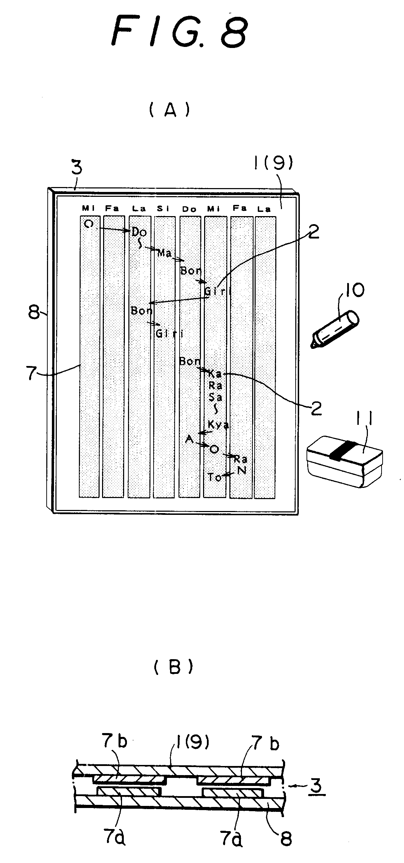

In the case that the indicating body (5) in the shape of a sheet on which the words of song can be written with a writing utensil such as marker or erased as occasion calls is used for the indicating part (1), convenience is provided by incorporating the indicating body and operating part in one as shown in the central portion of Figure 1. An example of such embodiment using the contact switch type switch piece is shown in Figure 8(A)(B). The composition of the switch piece (7) of the operating part (3) is almost same as the composition shown in the drawing, Figure 5 (A)(B), but the suface sheet (9) itself serves as the indicating body (5) made of flat surface material so that the words of song can be written with a writing utensil (10) such as marker or erased with the eraser (11) as described above. It is a convenient arrangement because there is no need to provide the indicating body and operating part separately.

In the case that the electric display type indicator (6) as shown in the lower portion of Figure 1 is used for the indicating part (1), the operating part (3) may be provided as an integrated body so that the operating part is formed on the screen of the indicator(6)with a photoelectric switch or touch switch using the indicating pen (12). Also in this case, the switching means may be formed in the shape of belt or aligned rectangles.

The scale generating part (4) is provided independently in the drawing to generate a sound and/or voice when switching means turn on. It can also be provided by incorporating the operating part (3) and the display type indicator (6) in one. The scale generating part of other electronic musical instrument may be used for it. It is desirable to adjust the scale of the indicating part to the major key for a person requiring treatment to sing a song easily because the melody of a song generated can be turned with C major, D majer, and E major, etc. A key controller (13) can be provided to change the major key while maintaining the constant musical interval for the desired song, it becomes possible to play a melody in actual sound for any major key that enables a person requring treatment to sing a song easily without changing the scale of the indicating part. As ordinary songs consists of various scales including the major key and minor key of musics, the positive scale and negative scale of Japanese music, and the scales and modulation of other folk music. Therefore, it is advisable to compose the scale generator (4) equipped with a scale controller (14) to control the kind of rhythms (average rhythm, genuine rhythm, and other rhythms) and scales for the desired song.

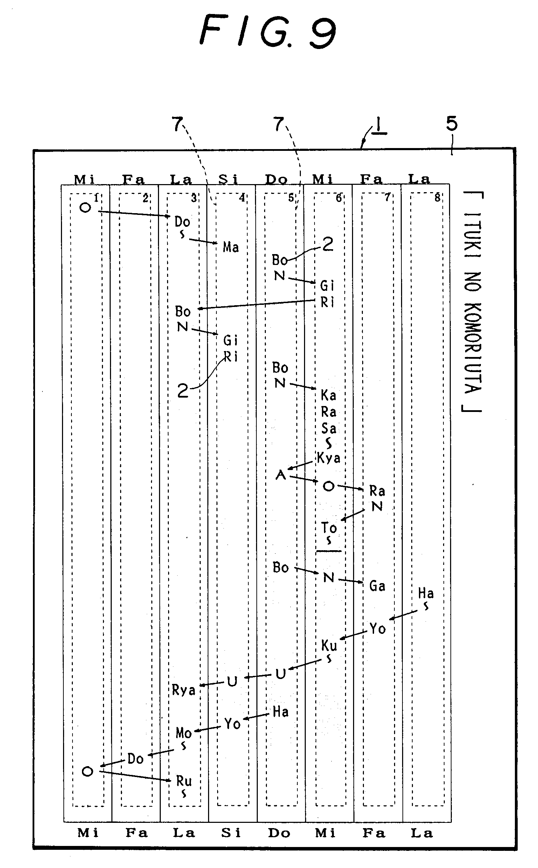

As shown in Figure 2 to 4, 6, and 7 above, all of the scale indications prepared for the indicating part are generally not used often for the song indicated (2) by the indicating part (1). Accordingly, it is useless to provide all switching means corresponding to the scale of the indicating part (1) for the operating part (3), and it makes it hard to operate the operating part. To avoid such situation, it is possible to use the indicating part (1) and operating part (3) omitting the unnecessary scales as shown in Figure 9. In this case, the code number such as a bar-code and the corresponding musical information on the rhythm and melody of the desired song is memorized in the memory units such as the floppy disk (16) and ROM (17) so that the relation between the switching means and the scale generator (4)can be controlled with the scale controller (14). Making the code reader (18) reads the code indication (15) indicated in advance on the indicationg body (5) in the shape of sheet, the controller controls the scale generator. This measure proves to be effective to the patient suffering from serious disorder.

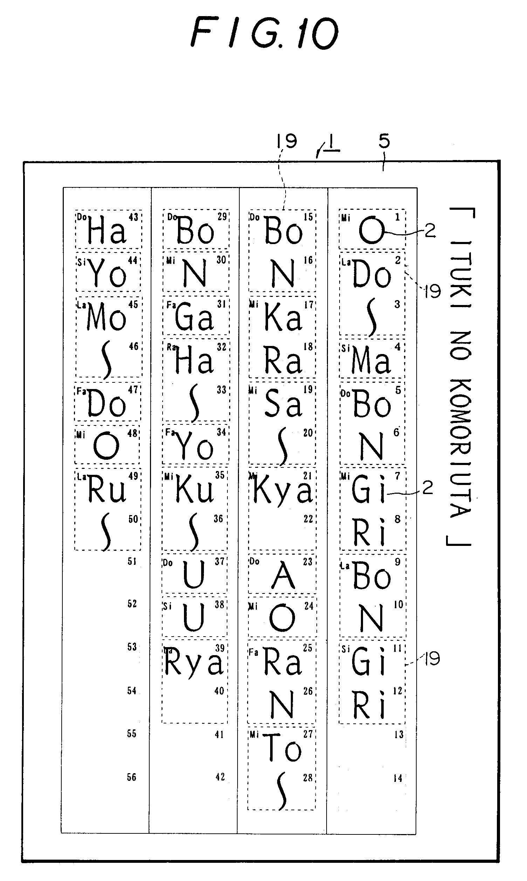

Moreover, as the relation between the switching means and scale generating part can be changed appropriately by use of the scale conroller as described above, it is possible to combine the switching means of the indicating part (1) and operating part (3) in various manners. For example, Figure 10 shows an example of such embodiment. As seen from the example, when representing the same sound generated successively by the indication of song (2) of the indicating part (1), a plurality of rectangular switch piece (7) is grouped into one unit (19); by controlling the musical scale per one unit, it is possible to sound the scale generator (4).

A person requiring treatment can generate a melody corresponding to the words of song with sound and/or voice using the scale generator (4), by pressing or touching the portion close to the indication of song (2) indicated by the indicating part with finger or toe, other part of body, the mouth stick (20) or the CRT indicating pen (12) to operate the switching means.

The invention is composed in such a manner as described above to sound the melody corresponding to the words of song familiar to a person requiring treatment with sound and/or voice merely by instructing them successively. Accordingly, the knowledge and skill required for playing a conventional musical instrument become unnecessary, and even patients suffering from dementia, aphasia, and other functional disorders of brain are able to voluntarily play and sing a desired song. Thus, the functions of brain can be recovered effectively.

## Claims

1. An instrument for musicotherapy comprising an indicating part that indicates the words of song, an operating part equipped with a switching means corresponding to the above words of song indicated by said indicating part, and a scale generator connected to the switching means of the indicating part wherein the sound and/or voice for the melody of pertinent song are generated to stimulate and urge a patient to sing the song when the switching means corresponding to the above words of song is operated.

2. An instrument accoding to claim 1, wherein said indicating part is the instrument for musicotherapy described as an indicating body in the shape of a sheet.

3. An instrument according to claim 1, wherein said indicating part is an indicating body in the shape of a sheet, and said indicating body and the operating part are incorporated in one.

4. An instrument according to claim 1, wherein said indicating part is an electric display type indicator, and said electric display type indicator and the operating part are incorporated in one.
